# EUROPEAN PATENT APPLICATION

(11) **EP 3 109 033 A1**
(43) Date of publication of application: **28.12.2016**
(21) Application number: 15173874.7
(22) Date of filing: 25.06.2015
(51) Int. Cl.: B29C 67/00, B29C 33/02

(54) **COMPRESSION MOULD, COMPRESSION MOULDING TOOL AND COMPRESSION MOULDING METHOD**

(71) Applicant: Airbus Operations GmbH, 21129 Hamburg (DE)
(72) Inventor: Sander, Peter, 021129 Hamburg (DE); Fette, Marc, 021129 Hamburg (DE); Herrmann, Axel, 021129 Hamburg (DE); Wulfsberg, Jens, 20457 Hamburg (DE)
(74) Representative: Isarpatent

(57) **Abstract**

The invention relates to a compression mould (1; 2) for a compression moulding tool (10), the compression mould (1; 2) being manufactured by an additive manufacturing, AM, method.

## Description

The present invention relates to a compression mould, a compression tool with such a compression mould, a compression moulding method and the use of a compression mould in a compression moulding method, in particular by using additive layer manufacturing (ALM), selective laser sintering (SLS) and/or solid freeform fabrication (SFF) processes for fabricating the compression mould.

In compression moulding, a moulding material such as for example sheet moulding compound (SMC) or bulk moulding compound (BMC) which has been preheated in a conventional oven by convection or infrared radiation is positioned in a cavity of the compression mould of a compression moulding tool. During the initial heating in the oven the fibers expand, resulting in a resin poor coating of the composite surface. In addition, this expansion of the fibers results in a lofting, or movement, of the fibers into the resin surface layers.

The compression mould usually includes a male moulding component, often called the plunger, and a female moulding component. The cavity between the male and female moulding component is shaped according to the desired shape of the thermoset composite compound to be moulded. Both moulding components get heated and pressed against each other, for example by a hydraulic ram. The moulding compound within the cavity is conformed to the moulding form under the pressure applied which is usually in the range of several tens of bar.

Once the heat from the heated moulding components has been transferred to the moulding compound, the moulding compound's temperature surpasses the curing temperature, for example 100°C to 150°C for polyester fiberglass resin systems. The pressure on the moulding material is maintained to keep the compound in contact with all mould areas, while the heating temperature is upheld until the moulding material has cured. After cooling the compression mould, the final cured composite part may be removed from the compression moulding tool. Compression moulding processes conventionally employ thermosetting resins in a partially cured stage, either in the form of granules, putty-like masses, or preforms. As closed moulding procedures, compression moulding methods are high volume and high pressure and thus suitable for moulding complex, high-strength fibreglass reinforced thermoset composite parts. Advanced composite thermoplastics may also be compression moulded using chopped strands, unidirectional tapes, randomly oriented fibre mats or other woven fabrics. One of the advantages of compression moulding lies in the opportunity to mould intricate parts of large dimensions.

"SMC" is a generic term including a large variety of product compositions, usually based on unsaturated polyesters, epoxy or vinylesters. SMCs may comprise additives such as lubricants or mould releases in order to improve surface finish, mould handling and other important parameters. SMC parts serve regularly as replacement parts for conventional steel or titanium components in various application fields, such as for example automotive industries or aerospace and aviation industries. SMCs may be enriched or reinforced with carbon, aramid, glassfibres and/or natural fibres such as hemp or sisal.

The different parts of compression moulding tools need to be specifically designed for the desired shape and properties of the moulded composite parts. This requires lots of effort, high cycle time and expensive tooling costs in manufacturing the moulds and other components of variable shape. Therefore, it would be desirable to find new design approaches in manufacturing compression moulding components.

Document US 8,245,378 B2 for example discloses methods and apparatuses for manufacturing components used in the manufacture of wearable articles. Document WO 00/32327 A2 discloses a method for producing sheet forming tools. Such manufacturing process may utilize rapid prototyping machines, such as for example disclosed in document US 2005/0280185 A1.

One object of the invention is therefore to provide solutions for manufacturing components of compression moulding tools, particularly in aerospace industries, which reduce cycle times, energy consumption and tooling costs as well as help to improve moulded part quality.

This object is achieved by a compression mould having the features of claim 1, the use of a compression mould in a compression moulding tool having the features of claim 8, a compression moulding tool having the features of claim 9, and a method for manufacturing a compression mould having the features of claim 10.

A first aspect of the invention hence pertains to a compression mould, for a compression moulding tool, the compression mould being manufactured by an additive manufacturing, AM, method.

According to a second aspect of the invention, the compression mould according to the first aspect of the invention is to be used as male and/or female mould component in a compression moulding tool.

According to a third aspect of the invention, a compression moulding tool comprises at least one compression mould according to the first aspect of the invention.

Finally, according to a fourth aspect of the invention, a method for manufacturing a compression mould comprises forming a compression mould body of the compression mould with an additive manufacturing, AM, method.

The idea on which the present invention is based is to fabricate tailor-made compression moulds using an additive manufacturing method, such as for example selective laser sintering (SLS), electron beam melting (EBM) or selective laser melting (SLM). The compression moulds may be either the male or the female mould component/die. The compression moulds fabricated in this manner may for example be made from maraging steel, a steel type of very high strength and a low carbon content. Maraging steel may comprise precipitated intermetallic compounds, for example alloys of nickel, cobalt, molybdenum, titanium, niob and/or chromium.

Among the several advantages of such compression moulds are the lightweight design and concomitantly the simplified transportation. Furthermore, the compression moulds may be fabricated with a high degree of structural complexity, freedom of design and intricate functional integration. The cycle times for fabricating the compression mould in that manner are significantly reduced, as well as the lead time for the design and production processes and the energy consumption during the fabrication. The material usage is optimized in AM methods since there is little to no waste material during the fabrication.

The solution of the invention offers great advantages for 3D printing or additive manufacturing (AM) technology since 3D components or objects may be printed without the additional need for subjecting the components or objects to further processing steps such as milling, cutting or drilling. This allows for a more efficient, material saving and time saving manufacturing process for objects.

Particularly advantageous in general is the reduction of costs, weight, lead time, part count and manufacturing complexity coming along with employing AM technology for printing structural components or other objects used for, employed in or being part of compression moulding tools. Moreover, the geometric shape of the printed compression moulds may be flexibly designed with regard to the intended functionality and desired purpose.

According to an embodiment of the compression mould, the AM method may comprise electron beam melting, EBM, selective laser melting, SLM, or selective laser sintering, SLS.

According to another embodiment of the compression mould, the compression mould may further comprise a plurality of heating channels running through the compression mould body, the plurality of heating channels being integrally manufactured with the AM method. Those heating channels may in one embodiment run in the vicinity of the cavity surface of the compression mould.

According to another embodiment of the compression mould, the compression mould may consist of one of maraging steel, stainless steel, titanium and aluminium, particularly maraging steel 1.2709.

According to another embodiment of the compression mould, the compression mould body may additionally comprise a biomimetic structure.

According to an embodiment of the method, the AM method may comprise electron beam melting, EBM, selective laser melting, SLM, or selective laser sintering, SLS.

According to another embodiment of the method, the method may further comprise integrally manufacturing a plurality of heating channels running through the compression mould body with the AM method. In one variation, this may include forming the plurality of heating channels in the vicinity of a cavity surface of the compression mould.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a functional diagram of a compression moulding tool according to an embodiment of the invention.
Fig. 2 schematically illustrates a flow diagram of a method for manufacturing a compression mould according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Additive layer manufacturing (ALM), selective laser sintering (SLS) and solid freeform fabrication (SFF) techniques, generally termed as 3D printing techniques, may be used in procedures for building up three-dimensional solid objects based on digital model data. 3D printing is currently used for prototyping and distributed manufacturing with multiple applications in engineering, construction, industrial design, automotive industries and aerospace industries.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods. Those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

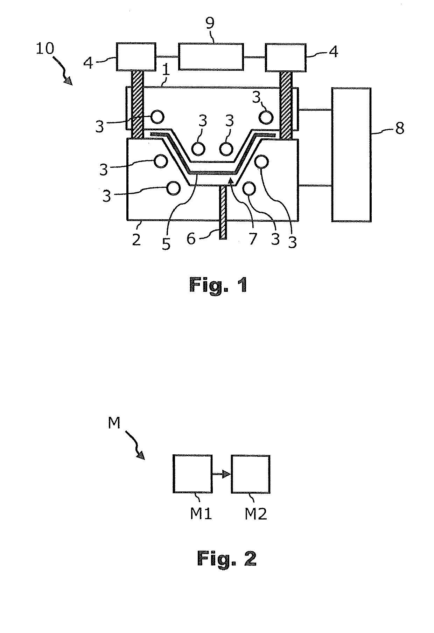

Fig. 1 schematically illustrates an exemplary compression moulding tool 10. The compression moulding tool 10 may generally comprise a male compression mould 1 which may be pressed down upon a female compression mould 2, for example by using a hydraulic ram 4 under the control of a ram controller 9. When the male compression mould 1 and the female compression mould 2 are brought into contact, a mould cavity 7 remains in between the compression moulds 1 and 2. The shape of the mould cavity 7 generally corresponds to the negative shape of the compression moulds 1 and 2.

A moulding compound, such as for example a sheet moulding compound (SMC) 5 may be inserted manually, robotically or in a continuous sheet rolling process into the mould cavity 7. Upon exerting pressure on the male compression mould 1, one or both of the compression moulds 1 and 2 may be heated up, for example by use of a heater 8. The heater 8 may operate electrically or pneumatically, pumping heating fluid through heating channels 3 which are introduced in or through the compression moulds 1 and 2. After heating up the mould compound 5 to a curing temperature between 50°C and 300°C, depending on the type of mould compound 5 and holding the mould compound 5 at that temperature for a certain timespan, usually several minutes, the mould compound 5 is cured to a composite part, i.e. the fibres in the mould compound cross-link.

The compression moulding tool 10 may comprise one or more ejector pins 6 reaching through the female compression mould 2 and configured to push out the cured composite part out of the mould cavity 7 after the compression moulding tool 10 has been opened again.

Due to the location, routing, size and shape of the heating channels 3, the compression moulds 1 and 2 heat up locally according to a predetermined temperature profile. This advantageously allows for maintaining an optimum temperature distribution within the composite part to be moulded.

The compression moulds 1 and 2 may be any type of shaped component that may be integrally manufactured using an AM or 3D printing technique. The compression moulds 1 and 2 may in particular be fabricated integrally, from any material suitable for an AM or 3D printing technique. Such 3D printing process may involve selectively depositing material layer by layer with the deposited material layers being coplanar to each other and having a normal axis corresponding to the 3D printing direction. Suitable AM techniques may involve electron beam melting (EBM), selective laser melting (SLM) or selective laser sintering (SLS). The compression moulds 1 and 2 may for example be manufactured from maraging steel, such as maraging steel 1.2709 (also known as X3NiCoMoTi 18-9 steel). It may also be possible to use other materials, such as for example aluminum, titanium or stainless steel. It may be possible to additionally harden, mill, chromize and/or polish the fabricated compression moulds 1 and 2.

The compression moulds 1 and 2 may have a compression mould body the internal structures may for example be designed according to biomimetic or bionic principles.

Fig. 2 shows a schematic illustration of a flow diagram of a method M for manufacturing a compression mould by using an additive manufacturing (AM) process. The method M may in particular be used to manufacture a compression mould 1 for use in a compression moulding tool 10 as exemplarily shown in Fig. 1.

At M1, a compression mould body of the compression mould is formed using an additive manufacturing, AM, method, such as for example electron beam melting, EBM, selective laser melting, SLM, or selective laser sintering, SLS. During the forming of the compression mould body, a step M2 may include integrally manufacturing a plurality of heating channels 3 running through the compression mould body. The plurality of heating channels 3 may particularly be formed in the vicinity of a cavity surface of the compression mould. The heating channels 3 may conveniently be formed with a respective design modification of the 3D slice model underlying the AM control process. By forming heating channels 3 near the vicinity of the cavity surface, the transfer and distribution of thermal energy into and through the mould compound can be optimized in order to enhance the material quality of the cured thermoset composite parts that are to be moulded using the 3D-printed compression moulds.

The method M may be transcribed into computer-executable instructions on a computer-readable medium which , when executed on a data processing apparatus, cause the data processing apparatus to perform the steps of the method. Particularly, the computer-executable instructions for executing the method M may be implemented in STL file or similar format which may be processed and executed using 3D printers, AM tools and similar rapid prototyping equipment.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Male compression mould
- 2: Female compression mould
- 3: Heating channel
- 4: Hydraulic ram
- 5: Sheet moulding compound
- 6: Ejector pin
- 7: Mould cavity
- 8: Heater
- 9: Ram controller
- 10: Compression moulding tool
- M: Method
- M1: Method step
- M2: Method step

## Claims

1. Compression mould (1; 2) for a compression moulding tool (10), the compression mould (1; 2) being manufactured by an additive manufacturing, AM, method.

2. Compression mould (1; 2) according to claim 1, wherein the AM method comprises electron beam melting, EBM, selective laser melting, SLM, or selective laser sintering, SLS.

3. Compression mould (1; 2) according to one of the claims 1 and 2, further comprising:
a plurality of heating channels (3) running through the compression mould body, the plurality of heating channels (3) being integrally manufactured with the AM method.

4. Compression mould (1; 2) according to claim 3, wherein the plurality of heating channels (3) are running in the vicinity of the cavity surface of the compression mould (1; 2).

5. Compression mould (1; 2) according to one of the claims 1 to 4, consisting of one of maraging steel, stainless steel, titanium and aluminum.

6. Compression mould (1; 2) according to claim 5, consisting of maraging steel 1.2709.

7. Compression mould (1; 2) according to one of the claims 1 to 6, wherein the compression mould body comprises a biomimetic structure.

8. Use of a compression mould according to one of the claims 1 to 7 as male and/or female mould component in a compression moulding tool (10).

9. Compression moulding tool (10), comprising:
at least one compression mould (1; 2) according to one of the claims 1 to 7.

10. Method (M) for manufacturing a compression mould (1; 2), the method (M) comprising:
forming (M1) a compression mould body of the compression mould (1; 2) with an additive manufacturing, AM, method.

11. Method (M) according to claim 10, wherein the AM method comprises electron beam melting, EBM, selective laser melting, SLM, or selective laser sintering, SLS.

12. Method (M) according to one of the claims 10 and 11, further comprising:
integrally manufacturing (M2) a plurality of heating channels (3) running through the compression mould body with the AM method.

13. Method (M) according to claim 12, wherein integrally manufacturing (M2) the plurality of heating channels (3) comprises forming the plurality of heating channels (3) in the vicinity of a cavity surface of the compression mould (1; 2).

14. Computer-readable medium comprising computer-executable instructions which, when executed on a data processing apparatus, cause the data processing apparatus to perform the method according to one of the claims 10 to 13.
